# EUROPÄISCHE PATENTANMELDUNG

(11) **EP 4 822 672 A1**
(43) Veröffentlichungstag der Anmeldung: **14.10.2026**
(21) Anmeldenummer: 26164389.4
(22) Anmeldetag: 12.03.2026
(51) Int. Cl.: G08G 1/054

(54) **MOBILES VERKEHRSÜBERWACHUNGSSYSTEM**

(30) Priorität: 24.03.2025 EP 25165677
(71) Anmelder: Kistler Holding AG, 8408 Winterthur (CH)
(72) Erfinder: Minkoley, Dennis, 8408 Winterthur (CH)

(57) **Zusammenfassung**

Die Erfindung betrifft ein mobiles Verkehrsüberwachungssystem (1) umfassend mindestens eine Sensorvorrichtung (2) und mindestens eine Kameravorrichtung (3); wobei die Sensorvorrichtung (2) eingerichtet ist eine Geschwindigkeit eines Fahrzeuges (26) auf einer Fahrbahn (27) zu erfassen; wobei die Kameravorrichtung eingerichtet ist zumindest einen Teilbereich des Fahrzeuges (26) auf der Fahrbahn (27) zu erfassen; wobei die Komponente (2,3,4) die Sensorvorrichtung (2) oder die Kameravorrichtung (3) oder eine Beleuchtungsvorrichtung (4) ist; wobei die Komponente (2,3,4) des Verkehrsüberwachungssystems (1) mit einem ersten Energiespeicher (5) für elektrischer Energie elektrisch verbunden ist und wobei die Komponente (2,3,4) mit mindestens einem zweiten Energiespeicher (6) für elektrische Energie elektrisch verbunden ist.

## Beschreibung

### Technisches Gebiet

Die vorliegende Erfindung betrifft eine mobile Verkehrsüberwachungsanlage.

### Stand der Technik

Die Überwachung des Straßenverkehrs ist von entscheidender Bedeutung für die Gewährleistung der Verkehrssicherheit und die Optimierung des Verkehrsflusses. Es wird zwischen stationären Verkehrsüberwachungssystemen und mobilen Verkehrsüberwachungssystemen unterschieden. Stationäre Verkehrsüberwachungssysteme sind üblicherweise fest an einem Ort installiert und werden durch einen Stromanschluss an ein vorhandenes Stromnetz mit Strom versorgt, was die Standortauswahl für stationäre Verkehrsüberwachungssysteme einschränkt. Auch ist der Standort nach einiger Zeit bekannt, was gegebenenfalls den Beitrag zur Verkehrssicherheit negativ beeinflussen kann. Mobile Verkehrsüberwachungssysteme hingegen werden üblicherweise an einem beliebigen Standort nur temporär stundenweise, tageweise oder für ein paar Wochen installiert. Für eine präzise Ermittlung der Geschwindigkeit eines Fahrzeugs auf einer Fahrbahn muss dafür die mobile Verkehrsüberwachungsanlage eingerichtet und kalibriert werden.

Mobile Verkehrsüberwachungssysteme sind aus dem Stand der Technik bekannt, insbesondere aus EP2708902A1 und EP3704683A1. Das Verkehrsüberwachungssystem umfasst dabei mindestens eine Sensorvorrichtung und zumindest eine Kameravorrichtung. Die Sensorvorrichtung ist eingerichtet ein Fahrzeug auf einer Fahrbahn zu erfassen und die Geschwindigkeit des Fahrzeugs als Geschwindigkeitsdaten zu ermitteln. Überschreitet die Geschwindigkeit eine zulässige Höchstgeschwindigkeit für Fahrzeuge auf diesem Streckenabschnitt der Fahrbahn, so wird zumindest ein Bild zumindest eines Teils des Fahrzeuges durch die Kameravorrichtung als Bilddaten aufgenommen. Bilddaten und Geschwindigkeitsdaten können anschliessend als Beweis einer Geschwindigkeitsübertretung genutzt werden. Oft ist auch eine Belichtungsvorrichtung, auch Lichtquelle oder Blitz genannt, vorgesehen, um zumindest Teile des Fahrzeugs, wie z.B. Nummernschild, Fahrerin, oder andere Merkmale zu beleuchten, um insbesondere bei Dunkelheit die Qualität der Bilddaten zu erhöhen.

Sensorvorrichtung, Kameravorrichtung sowie Beleuchtungsvorrichtung werden auch als Komponenten des Verkehrsüberwachungssystem bezeichnet. Neben den drei genannten Komponenten kann ein Verkehrsüberwachungssystem auch weitere Komponenten aufweisen.

Es ist durchaus üblich, so auch im beschriebenen Stand der Technik, dass Sensorvorrichtung und Kameravorrichtung beabstandet voneinander angeordnet sind. Bilddaten bzw. Geschwindigkeitsdaten werden entweder drahtlos oder mittels Datenkabel an eine Sicherungsvorrichtung übertragen. Eine mobile Verkehrsüberwachungsanlage bzw. gegebenenfalls Sensorvorrichtung, jede Kameravorrichtung sowie zumindest von einer Kameravorrichtung beabstandete Beleuchtungsvorrichtungen benötigen daher jeweils eine separate Stromversorgung, die unabhängig von Infrastruktur funktioniert. So ist in EP3704683A1 die Stromversorgung mit einer wiederaufladbaren Batterie, einem sogenannten Akkumulator oder Akkupack (kurz Akku), beschrieben. Diese Batterien sind üblicherweise gross und sperrig, da sie die Stromversorgung für eine längere Zeit gewährleisten müssen. Die Batterien sind meist in Transportkoffern, auch Batteriekästen genannt, für den Außeneinsatz mit eingebauten Steckdosen zum Anschluss von Kabeln an die Batterie integriert. Wird das mobile Verkehrsüberwachungssystem für Messungen an einem Standort eingerichtet, werden Batteriekästen in der Regel direkt auf dem Boden neben den Komponenten platziert. Die Komponenten, wie beispielsweise Sensorvorrichtung, Kameravorrichtung und/oder Beleuchtungsvorrichtung werden dann über Kabel entweder mit einem zentralen Batteriekasten oder jeweils mit einem Batteriekasten verbunden. Das Gewicht eines solchen Batteriekastens ist mit derzeit üblicherweise mehr als 10 kg sehr hoch.

Ist ein Batteriekasten entladen, so muss er durch einen geladenen Batteriekasten ersetzt werden. Dies ist zum einen umständlich, da der Batteriekasten schwer und sperrig ist. Zum anderen ist die Komponente beim Wechsel des Batteriekastens kurzzeitig ohne Stromversorgung und muss daher vorgängig abgeschaltet werden. Beim erneuten Einschalten der Komponente muss diese neu gestartet werden, Selbsttests zur Funktion durchführen, und eine erneute Verbindung mit den weiteren Komponenten des Verkehrsüberwachungssystems aufbauen. Insbesondere bei Funkverbindungen kann der Neuaufbau der Verbindung sowie der Selbsttest und insgesamt das Starten Komponente bis zur Betriebsbereitschaft längere Zeit in Anspruch nehmen, während der das Verkehrsüberwachungssystems keine Messungen durchführen kann. Es geht wertvolle Zeit für die Überwachung des Verkehrs verloren.

Auch sind Verkehrsüberwachungssysteme mit integrierter Einschubbatterie bekannt, beispielsweise das Verkehrsüberwachungssystem ES 8.0 der Firma Kistler. Die Komponenten Sensorvorrichtung, Kameravorrichtung, sowie Beleuchtungsvorrichtung verfügen jeweils über ein Batteriefach innerhalb des Gehäuses der jeweiligen Komponente, in das ein Akkupack eingesetzt werden kann. Batteriekästen müssen nicht auf dem Boden platziert werden und es sind keine Kabelverbindungen erforderlich, jedoch sind die Akkupacks mit etwa 15 cm x 10 cm x 11 cm relativ groß und zudem mit mehr als 2 kg Gewicht pro Akkupack relativ schwer. Benutzer/-innen müssen den Akkupack rein aufgrund seines Gewichts separat zum Ort der Komponente transportieren und erst einsetzen, nachdem die Komponenten an der Fahrbahn angeordnet sind. Beim Einsetzen oder einem allfällig nötigen Wechsel des Akkupacks besteht zudem auf Grund des hohen Gewichts des Akkupacks die Gefahr, dass die Komponente verschoben wird, was insbesondere bei der Sensorvorrichtung gegebenenfalls eine Neujustage erforderlich machen kann.

Für ein mobiles Verkehrsüberwachungssystem ist es von höchster Wichtigkeit, dass das System schnell und einfach vor Ort eingerichtet werden kann. Das System soll innerhalb von Minuten messbereit sein und sollte mindestens eine volle Schicht von etwa 8 Stunden ohne Unterbrechung oder nur mit geringen geplanten Unterbrechungen messbereit sein. Normalerweise muss das System beim Wechsel eines Batteriekastens oder eines Akkupacks zuerst heruntergefahren und nach dem Batteriewechsel neu gestartet werden. Bei jedem Systemstart müssen Selbsttests durchgeführt werden und anschließend möglicherweise eine neue Kalibrierung des Verkehrsüberwachungssystems. Auch muss eine Wiederherstellung der Datenverbindung zu anderen Systemkomponenten erfolgen, was für Benutzende zeitaufwendig ist. Insbesondere wenn die Überwachung des Batteriestatus eines Akkupacks oder eines Batteriekastens in Komponenten des Verkehrsüberwachungssystems ausschliesslich auf der Batteriespannung beruht, ist es schwierig, die verbleibende Batterielaufzeit vorherzusagen. Systemausfälle aufgrund eines Spannungsabfalls bei entladenen Batteriekästen oder Akkupacks kommen für Benutzende oft überraschend.

Aufgabe der Erfindung ist es die erwähnten Nachteile zu verringern.

### Darstellung der Erfindung

Die Aufgabe wird durch die Merkmale der unabhängigen Ansprüche gelöst.

Die Erfindung betrifft ein mobiles Verkehrsüberwachungssystem umfassend mindestens eine Sensorvorrichtung und mindestens eine Kameravorrichtung. Die Sensorvorrichtung ist eingerichtet eine Geschwindigkeit eines Fahrzeuges auf einer Fahrbahn zu erfassen. Die Kameravorrichtung ist eingerichtet zumindest einen Teilbereich eines Fahrzeuges auf einer Fahrbahn zu erfassen. Sensorvorrichtung und Kameravorrichtung werden als Komponenten des Verkehrsüberwachungssystems bezeichnet. Weitere Komponenten sind beispielsweise eine Beleuchtungsvorrichtung oder eine Kameravorrichtung mit integrierter Beleuchtungsvorrichtung. Eine Komponente ist also die Sensorvorrichtung oder die Kameravorrichtung oder die Beleuchtungsvorrichtung.

Die Sensorvorrichtung kann die Geschwindigkeit eines Fahrzeugs auf einer Fahrbahn erfassen und bereitstellen. Bereitstellen bedeutet in diesem Zusammenhang das digitale Vorhandensein der erfassten Geschwindigkeit als Datensignal. Das Datensignal ist verfügbar zur anschliessenden Übertragung und/oder Speicherung auf einem Datenträger. Die Sensorvorrichtung kann als Einseitensensor ausgestaltet sein, wie aus dem ES8.0 System der Firma Kistler bekannt. Die Sensorvorrichtung kann aber auch als Lichtschrankenanordnung, beispielsweise mit passiven, gegenüberliegenden Reflektoren, als laser- oder radarbasiertes Geschwindigkeitsmesssystem, basierend auf optischer Stereoskopie, als LIDAR oder anderen geeigneten Systemen zur Geschwindigkeitserfassung eines Fahrzeuges ausgestaltet sein.

Die Kameravorrichtung ist eingerichtet mindestens einen Teilbereich des Fahrzeuges zu erfassen und bereitstellen. Bereitstellen bedeutet in diesem Zusammenhang das digitale Vorhandensein des oder der erfassten Bilddaten als Datensignal. Das Datensignal ist verfügbar zur anschliessenden Übertragung und/oder Speicherung auf einem Datenträger. Die Kameravorrichtung erfasst zumindest das Nummernschild eines Fahrzeuges. Besonders bevorzugt erfasst die Kameravorrichtung ebenfalls den Fahrer oder die Fahrerin des Fahrzeuges. Die Erfassung kann beispielsweise ausgelöst werden, wenn eine Geschwindigkeitsüberschreitung durch die Sensorvorrichtung erkannt wurde. Bevorzugt wird die Kameravorrichtung über ein drahtloses Triggersignal ausgelöst.

Die Beleuchtungsvorrichtung ist eingerichtet das Nummernschild und/oder zumindest einen Teilbereich des Fahrzeugs zu beleuchten. Dies dient der Verbesserung der Bildqualität der Fotoeinrichtung, beispielsweise bei schlechten Lichtverhältnissen bei Dämmerung oder in der Nacht. Die Beleuchtungsvorrichtung kann dabei dauerhaft beleuchten oder zeitgleich mit der Kamera ausgelöst werden. Beleuchtungsvorrichtung ist auch als Blitzlicht oder Blitz oder Blitzeinheit bekannt. Üblicherweise wird ein Licht im Infrarotbereich verwendet, um eine Blendung der Fahrerin oder des Fahrers zu vermeiden. Bevorzugt wird die Beleuchtungsvorrichtung über ein drahtloses Triggersignal ausgelöst.

Die Komponente des Verkehrsüberwachungssystems ist mit einem ersten Energiespeicher für elektrischer Energie elektrisch verbunden.

Erfindungsgemäss ist die Komponente mit mindestens einem zweiten Energiespeicher für elektrische Energie elektrisch verbunden.

Der Energiespeicher für elektrische Energie ist auch als Akkumulator oder umgangssprachlich als Batterie bekannt und wird im Folgenden auch kurz als Energiespeicher bezeichnet. Der Energiespeicher ist mit elektrischer Energie geladen und stellt elektrische Energie für den Betreib der Komponente bereit. Der Energiespeicher kann mittels eines geeigneten Ladegeräts nach teilweiser oder vollständiger Entladung wieder mit elektrischer Energie geladen werden. Ein Beispiel für einen solchen Energiespeicher ist die Li-Ionen-Batterie vom Typ RRC2054-2 des Herstellers RRC, die auch mit einem intelligenten Doppelladegerät geliefert wird. Vorteilhaft ist, dass die Komponente auch dann noch mit elektrischer Energie versorgt werden kann, wenn ein Energiespeicher teilweise oder vollständig entladen ist oder ausgetauscht werden soll. Dadurch wird eine Redundanz bei der Versorgung mit elektrischer Energie sichergestellt, beispielsweise wenn ein Energiespeicher nicht vollständig geladen war oder vorzeitig entleert ist. Die Energiespeicher können so nacheinander ausgetauscht werden. Weiter vorteilhaft müssen Komponenten nicht abgeschaltet und/oder neu gestartet und/oder eingerichtet werden, wenn Energiespeicher ausgetauscht werden. Während die Sensorvorrichtung und Kameravorrichtung in der Regel konstant elektrische Energie aus den Energiespeichern verwenden, hängt der Energieverbrauch der Beleuchtungsvorrichtung von der Anzahl der Beleuchtungen, auch Blitze genannt, und damit von der Anzahl der erkannten Geschwindigkeitsüberschreitungen, auch Geschwindigkeitsverstösse oder kurz Verstösse, ab. Die Beleuchtungsvorrichtung kann je nach Messort flexibel mit mehr oder weniger Batterien eingesetzt werden und Batterien können sogar ausgetauscht werden, ohne den aktiven Messmodus zu stoppen.

Bevorzugt ist vorgesehen, die Komponente auch mit mehr als zwei Energiespeichern elektrisch zu verbinden. Dies ist ohne weiteres mutatis mutandis möglich unter Beibehaltung beziehungsweise Verbesserung der genannten Vorteile. Auch kann so eine weitere Redundanz erzielt werden und die Versorgung der Komponente mit elektrischer Energie gewährleistet werden, selbst wenn ein Energiespeicher fehlerhaft sein sollte und keine elektrische Energie bereitstellt.

Bevorzugt ist in einer Ausgestaltung des Verkehrsüberwachungssystems vorgesehen, dass erster Energiespeicher und zweiter Energiespeicher eingerichtet sind, die Komponente unabhängig voneinander mit elektrischer Energie zu versorgen. Dies ist vorteilhaft, da die Versorgung der Komponenten mit elektrischer Energie vollständig redundant ist. So kann beispielsweise auch zunächst ein Energiespeicher die Komponente mit elektrischer Energie versorgen und erst nach teilweiser Entladung dieses Energiespeichers die Versorgung durch den weiteren Energiespeicher erfolgen. Derart kann ein zeitlich versetzter Austausch des Energiespeichers bei teilweiser oder vollständiger Entladung erfolgen.

Bevorzugt ist der erste Energiespeicher reversibel mit der Komponente verbindbar und der zweite Energiespeicher reversibel mit der Komponente verbindbar. Die reversible Verbindung ermöglicht vorteilhafterweise einen einfachen und effizienten Austausch eines teilweise oder vollständig entladenen Energiespeichers durch einen geladenen Energiespeicher.

Auch vorteilhaft ist vorgesehen, dass der erste Energiespeicher die Komponente mit elektrischer Energie versorgt, wenn ein teilweise entladener zweiter Energiespeicher zur Auswechselung mit einem geladenen Energiespeicher entfernt ist. So ist vorteilhaft eine unterbruchfreie Nutzung der Komponente möglich. Ein erneutes Einrichten der Komponente, wie es bei zeitweisem Unterbruch der Stromversorgung nötig ist, beispielsweise ein neues Verbinden mit einem Drahtlosnetzwerk oder eine erneute Konfiguration der Komponente entfällt, wodurch die Verkehrsüberwachung unterbruchsfrei erfolgen kann.

Besonders bevorzugt ist der erste Energiespeicher als intelligenter Energiespeicher und der zweite Energiespeicher als intelligenter Energiespeicher ausgeführt. Ein intelligenter Energiespeicher weist neben der Eignung zur Versorgung mit elektrischer Energie weitere Funktionen auf. So weist ein intelligenter Energiespeicher zumindest einen Temperaturfühler und einen Spannungsmesser für elektrische Spannung auf. So ist vorteilhaft beispielsweise ein Abschalten des Energiespeichers möglich, falls infolge eines Defekts die Temperatur des Energiespeichers ansteigt. So kann ein defekter Energiespeicher erkannt und ausgetauscht werden. Auch ist durch die Kenntnis der Spannung der Grad der Ladung eines Energiespeichers möglich. Normale Temperatur und/oder überhöhte Temperatur und/oder ausreichende elektrische Energie und/oder unzureichende elektrische Energie können beispielsweise über eine Statusleuchte, auch Status-LED genannt, und/oder eine Anzeigevorrichtung, beispielwiese ein LCD Bildschirm am Energiespeicher angezeigt werden. So ist niedriger Ladezustand oder erhöhte Temperatur des Energiespeichers sofort sichtbar und der Energiespeicher kann beispielsweise ausgetauscht werden.

Besonders bevorzugt stellt der Temperaturfühler eine Temperatur des Energiespeichers als Temperatursignal bereit. Auch bevorzugt stellt der Spannungsmesser die elektrische Spannung des Energiespeichers als Spannungssignal bereit. Mindestens Spannungssignal und Temperatursignal sind als Datensignal bereitgestellt. Dies ist vorteilhaft, da das bereitgestellte Datensignal zur weiteren Verarbeitung genutzt werden kann, beispielsweise zur Übertragung an die Komponente.

Die Komponente ist bevorzugt eingerichtet das Datensignal des ersten Energiespeichers zu erfassen und das Datensignal des zweiten Energiespeichers zu erfassen. Bevorzugt stellt die Komponente die erfassten Datensignale bereit, beispielsweise zur Übertragung an eine Kontrollvorrichtung. Die Kontrollvorrichtung ist üblicherweise zur Kontrolle der Komponenten eines Verkehrsüberwachungssystems vorgesehen. So sind mit der Kontrollvorrichtung alle aktiven Komponenten des Verkehrsüberwachungssystems elektronisch verbunden, beispielsweise durch Datenkabel oder ähnliches. Auch ist oftmals vorgesehen Bilddaten und/oder Geschwindigkeitsdaten zu visualisieren und/oder auf einem Datenspeicher zu speichern. Die zusätzliche Möglichkeit zur Darstellung des Datensignals durch die Kontrollvorrichtung ist daher vorteilhaft, da bei Verwendung des Verkehrsüberwachungssystems die Kontrollvorrichtung üblicherweise dauerhaft oder zumindest oft im Blickfeld des Bedienpersonals ist und somit das Bedienpersonal einen fast vollständig entladenen Energiespeicher sofort erkennen und für einen Austausch vorsehen kann.

Üblicherweise weist die Komponente ein Gehäuse auf. Das Gehäuse weist bevorzugt eine erste Haltevorrichtung auf. In einer Ausführungsform der Komponente ist die erste Haltevorrichtung an einer Aussenseite des Gehäuses angeordnet. Der erste Energiespeicher ist mit der ersten Haltevorrichtung einschiebbar oder einrastbar reversibel verbindbar. Zudem weist das Gehäuse mindestens eine zweite Haltevorrichtung auf. Die zweite Haltevorrichtung ist in dieser Ausführungsform der Komponente ebenfalls an der Aussenseite des Gehäuses angeordnet. Der zweite Energiespeicher ist mit der zweiten Haltevorrichtung einschiebbar oder einrastbar reversibel verbindbar. Bevorzugt weist die Haltevorrichtung eine Spannvorrichtung, beispielsweise eine Druckfeder, und eine Verriegelung auf. Beim Einschieben oder Einrasten wird die Spannvorrichtung leicht durch den Energiespeicher vorgespannt und die Verriegelung verriegelt, sodass der Energiespeicher leicht gegen die Verriegelung vorgespannt ist und daher spielfrei an der Haltevorrichtung angeordnet ist. Beim Entfernen des Energiespeichers wird die Verriegelung geöffnet, wodurch der Energiespeicher leicht aus der Haltevorrichtung entnehmbar ist. Dies hat den Vorteil, dass der Energiespeicher einfach und unkompliziert wechselbar ist und gleichzeitig sicher und platzsparend am Gehäuse versorgt ist und auch durch Vibrationen z.B. beim Transport nicht verrutschen oder gar herausfallen kann.

In einer alternativen und derzeit bevorzugten Ausführungsform weist das Gehäuse eine erste Aussparung für den ersten Energiespeicher auf. Zudem weist das Gehäuse eine zweite Aussparung für den zweiten Energiespeicher auf. Der erste Energiespeicher ist in die erste Aussparung einschiebbar. Der zweite Energiespeicher ist in die zweite Aussparung einschiebbar. In der ersten Aussparung ist eine erste Haltevorrichtung angeordnet. In der zweiten Aussparung ist eine zweite Haltevorrichtung angeordnet. Der erste Energiespeicher ist mit der ersten Haltevorrichtung einschiebbar oder einrastbar reversibel verbindbar. Der zweite Energiespeicher ist mit der zweiten Haltevorrichtung einschiebbar oder einrastbar reversibel verbindbar. Bevorzugt weist die Haltevorrichtung eine Spannvorrichtung, beispielsweise eine Druckfeder, und eine Verriegelung auf. Beim Einschieben oder Einrasten wird die Spannvorrichtung leicht durch den Energiespeicher vorgespannt und die Verriegelung verriegelt, sodass der Energiespeicher leicht gegen die Verriegelung vorgespannt ist und daher spielfrei an der Haltevorrichtung angeordnet ist. Beim Entfernen des Energiespeichers wird die Verriegelung geöffnet, wodurch der Energiespeicher leicht aus der Haltevorrichtung entnehmbar ist. Dies hat den Vorteil, dass der Energiespeicher einfach und unkompliziert wechselbar ist und gleichzeitig sicher und platzsparend in der Aussparung des Gehäuses versorgt ist. Die erste Aussparung und die zweite Aussparung können beabstandet voneinander im Gehäuse angeordnet sein. Alternativ können erste und zweite Aussparung auch miteinander zu einer grösseren Aussparung verbunden sein, wobei die verbundenen erste und zweite Aussparung weiterhin eine erste und eine zweite Haltevorrichtung aufweisen. Bevorzugt kann die erste Aussparungen mit einer ersten Abdeckung verschliessbar sein und die zweite Aussparungen mit einer zweiten Abdeckung verschliessbar sein. Besonders bevorzugt sind die Abdeckungen jeweils mit einem Dichtmittel zur Abdichtung des Gehäuses gegen Umwelteinflüsse, beispielsweise Regen oder Staub, versehen.

Die erste Haltevorrichtung weist ein elektrisches Verbindungsmittel auf. Ebenso weist der erste Energiespeicher ein elektrisches Verbindungsmittel auf. Die ersten elektrischen Verbindungsmittel sind eingerichtet einen elektrischen Kontakt zur Übertragung von elektrischer Energie zwischen erstem Energiespeicher und der Komponente herzustellen. Zudem sind die ersten elektrischen Verbindungsmittel eingerichtet einen elektrischen Kontakt zur Übertragung des Datensignals zwischen erstem Energiespeicher und der Komponente herzustellen. Die zweite Haltevorrichtung weist ein elektrisches Verbindungsmittel auf. Ebenso weist der zweite Energiespeicher ein elektrisches Verbindungsmittel auf. Die zweiten elektrischen Verbindungsmittel sind eingerichtet einen elektrischen Kontakt zur Übertragung von elektrischer Energie zwischen der Komponente und zweitem Energiespeicher herzustellen. Die zweiten elektrischen Verbindungsmittel sind auch eingerichtet einen elektrischen Kontakt zur Übertragung des Datensignals zwischen zweitem Energiespeicher und der Komponente herzustellen. Das elektrische Verbindungsmittel ist als elektrischer Kontakt ausgestaltet, beispielsweise als elektrisch leitendes Plättchen am Verbindungsmittel des Energiespeichers in Kombination mit einer elektrisch leitenden Druckfeder im Verbindungsmittel der Haltevorrichtung. Selbstverständlich ist auch eine andere Ausgestaltung des Verbindungsmittels möglich. Der elektrische Kontakt zwischen Energiespeicher und Komponente ist dabei einfach reversible herstellbar. Kontakt besteht, wenn der Energiespeicher in der Haltevorrichtung angeordnet ist. Die Übertragung von elektrischer Energie und Datensignal ist so vorteilhafterweise kompakt ausgeführt.

Vorteilhaft an der Möglichkeit des schnellen Austauschs eines oder mehrerer Energiespeicher bei unterbruchfreier Funktion der Komponente ist, dass es nicht nötig ist einen grossen Energiespeicher für die Verwendung mit einer Komponente zu nutzen. Grosse Energiespeicher sind aus dem Stand der Technik bekannt und versorgen eine Komponente während einer Messschicht, welche üblicherweise bis zu 8 Stunden dauert, mit Strom. Daher sind sie meist mit 10 kg Gewicht sehr schwer. Ein Wechsel des Energiespeichers bedeutet nach dem Stand der Technik, dass eine Komponente kurzfristig nicht mehr mit elektrischer Energie versorgt wird und die Komponente, nach Wechsel des Energiespeichers neu gestartet und mit dem Verkehrsüberwachungssystem verbunden werden muss. Während dieser Zeit ist keine Überwachung des Verkehrs möglich. Auch müssen Komponente und der Energiespeicher nach dem Stand der Technik auf Grund des hohen Gewichts meist nacheinander zum Aufstellort der Komponente gebracht werden.

Der erste und zweite Energiespeicher der Komponente sind bevorzugt leicht ausgeführt mit einem Gewicht des Energiespeichers gleich oder kleiner 1 kg, bevorzugt gleich oder kleiner 500 g. Da ein Wechsel der Energiespeicher unterbruchsfrei möglich ist, muss ein einzelner der Energiespeicher nicht den Stromverbrauch einer Komponente während der gesamten Messschicht abdecken. In manchen Jurisdiktionen ist ein kleiner Unterbruch der eigentlichen Messtätigkeit jedoch nötig, wenn die Komponente der Geschwindigkeitsmessvorrichtung ist, da keine Messung einer Geschwindigkeit durchgeführt werden darf, während die Geschwindigkeitsmessvorrichtung berührt wird. Dieser Unterbruch für Messungen ist jedoch viel kürzer als ein kompletter Verlust der Energieversorgung, da die Komponente nicht erneut gestartet und mit der Verkehrsüberwachungsanlage verbunden werden muss. Außerdem ermöglicht das niedrige Gewicht der Energiespeicher einen besseren Arbeitsablauf, bei dem die Benutzerin oder der Benutzer nicht mehrmals hin und her laufen muss, um zuerst die Komponenten auf Stativen einzurichten und dann die Batterien nach dem Stand der Technik zu den Komponenten zu bringen und anzuschliessen. Die bevorzugten Energiespeicher sind so leicht, dass sie in den Komponenten verbleiben können und bereits vor dem Messeinsatz des Verkehrsüberwachungssystems eingesetzt werden können, bevor die Komponenten zum Messort gefahren werden. Zudem ermöglichen kleinere Energiespeicher eine einfachere Handhabung für den Benutzer oder die Benutzerin, wodurch ein schnellerer Aufbau des Verkehrsüberwachungssystems ermöglicht wird. Es müssen weniger Teile getragen und keine Kabel verlegt werden. Zudem lassen sich Komponenten mit kleinen Energiespeichern besser verbergen, um aus Fahrzeugen nicht direkt gesehen zu werden als Komponenten mit grossen und sperrigen Batterien.

Bevorzugt sind zumindest die Spannung des ersten Energiespeichers und die Spannung des zweiten Energiespeichers als Datensignal an die Kontrollvorrichtung übertragbar. Die Übertragung erfolgt bevorzugt drahtlos, beispielsweise über eine drahtlose Funkverbindung wie Bluetooth, WLAN (wireless local area network) oder eine drahtlose Datenverbindung im ISM Band. Besonders bevorzugt sind zumindest die Spannung des ersten und zweiten Energiespeichers und/oder eine Restlaufzeit, kurz auch Laufzeit, des ersten und zweiten Energiespeichers und/oder ein Ladestand des ersten und zweiten Energiespeichers auf einem Bildschirm der Kontrollvorrichtung übertragbar. Insbesondere sind zumindest die Spannung des ersten und zweiten Energiespeichers und/oder eine Restlaufzeit des ersten und zweiten Energiespeichers und/oder ein Ladestand des ersten und zweiten Energiespeichers auf einem Bildschirm der Kontrollvorrichtung anzeigbar. Im Verkehrsüberwachungssystem werden die Energiespeicher bevorzugt mithilfe der intelligenten Funktionen der Energiespeicher über den elektrischen Kontakt des Verbindungsmittels zur Übertragung des Datensignals, auch Kommunikationsschnittstelle genannt, überwacht. Das Datensignal umfasst je nach Hersteller des intelligenten Energiespeichers beispielsweise Batteriestatus und/oder, Gesundheitszustand des Energiespeichers und/oder Temperatur des Energiespeichers und/oder aktuelle Abgabe von Strom und aktuelle Spannung des Energiespeichers und/oder Ladezustand des Energiespeichers und/oder verbleibende Laufzeit des Energiespeichers. Dies liefert der Benutzerin oder dem Benutzer wertvolle Informationen, um bei Bedarf einen Wechsel des Energiespeichers zu planen, anstatt von einem Systemausfall aufgrund eines entladenen Energiespeichers zu einem ungünstigen Zeitpunkt überrascht zu werden. Besonders bevorzugt ist die vorhersehbare Energiespeicherlebensdauer durch fortschrittliche Überwachung der effektiven verbleibenden Batterielaufzeit auf der Kontrollvorrichtung anzeigbar. Der Benutzer kann bei Bedarf einen vorbeugenden Wechsel des Energiespeichers planen, wenn die Lebensdauer der Energiespeichers erreicht ist und die Kapazität zum Speichern elektrischer Energie nicht mehr den Anforderungen genügt.

Bevorzugt ist die Komponente eine Sensorvorrichtung und/oder eine Kameravorrichtung und/oder eine Beleuchtungsvorrichtung und/oder eine Kameravorrichtung mit integrierter Beleuchtungsvorrichtung.

Zur erfindungsgemässen Verwendung des mobilen Verkehrsüberwachungssystems werden ein oder mehrere Komponenten an einer Fahrbahn angeordnet. Die Kontrollvorrichtung wird von der Komponente beabstandet angeordnet. Die eine oder mehreren Komponenten werden mit der Kontrollvorrichtung drahtlos verbunden. Zumindest die Spannung des ersten Energiespeichers und die Spannung des zweiten Energiespeichers werden als Datensignal an die Kontrollvorrichtung übertragen. Bevorzugt werden zumindest die Spannung des ersten und zweiten Energiespeichers und/oder eine Restlaufzeit des ersten und zweiten Energiespeichers und/oder ein Ladestand des ersten und zweiten Energiespeichers auf dem Bildschirm der Kontrollvorrichtung angezeigt. Es wird bei Verwendung des Verkehrsüberwachungssystems eine Aufforderung zum Wechsel eines Energiespeichers angezeigt, wenn die Spannung des Energiespeichers einen vordefinierten Wert unterschreitet. Der Energiespeicherwechsel erfolgt, ohne dass die Komponente in ihrer Funktionalität beeinträchtigt wird.

### Kurze Beschreibung der Zeichnungen

Im Folgenden wird die Erfindung beispielhaft unter Beizug der Figuren näher erklärt. Es zeigen
- Fig. 1: eine schematische Teilansicht eines mobilen Verkehrsüberwachungssystems nach dem Stand der Technik,
- Fig. 2: eine schematische Teilansicht eines mobilen Verkehrsüberwachungssystems mit erfindungsgemässen Komponenten,
- Fig. 3: eine schematische Teilansicht einer Ausführungsform einer Komponente eines mobilen Verkehrsüberwachungssystems,
- Fig. 4: eine weitere schematische Teilansicht der Ausführungsform der Komponente aus Fig. 3,
- Fig. 5: eine weitere schematische Teilansicht der Ausführungsform der Komponente aus Fig. 3,,
- Fig. 6: eine weitere schematische Teilansicht der Ausführungsform der Komponente aus Fig. 3,
- Fig. 7: eine schematische Teilansicht einer weiteren Ausführungsform der Komponente eines mobilen Verkehrsüberwachungssystems,
- Fig. 8: eine weitere schematische Teilansicht der Ausführungsform der Komponente aus Fig. 7,
- Fig. 9: eine weitere schematische Teilansicht der Ausführungsform der Komponente aus Fig. 7,
- Fig. 10: eine weitere schematische Teilansicht der Ausführungsform der Komponente aus Fig. 7,
- Fig. 11: eine schematische Teilansicht eines Details einer Haltevorrichtung mit Energiespeicher,
- Fig. 12: eine schematische Teilansicht einer weiteren Ausführungsform der Komponente eines mobilen Verkehrsüberwachungssystems,
- Fig. 13: eine schematische Teilansicht einer weiteren Ausführungsform der Komponente eines mobilen Verkehrsüberwachungssystems,
- Fig. 14: eine schematische Darstellung eines mobilen Verkehrsüberwachungssystems.

### Wege zur Ausführung der Erfindung

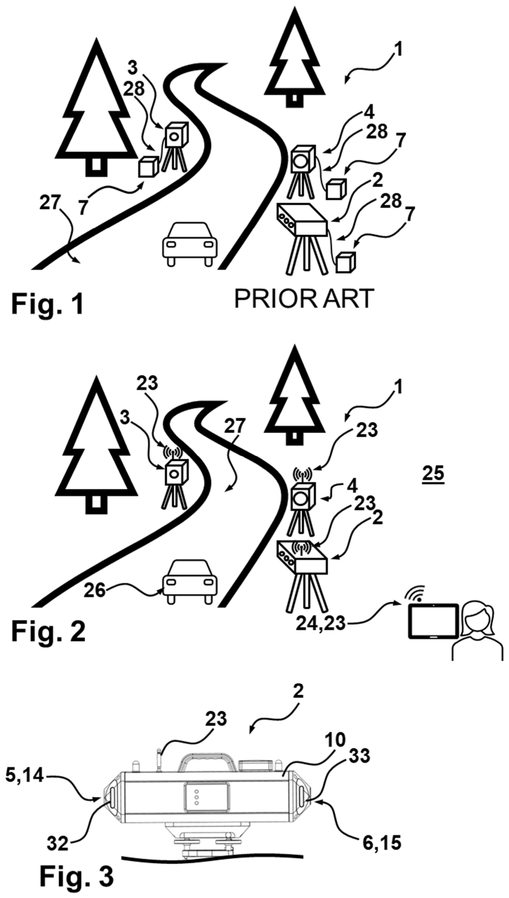

Fig. 1 zeigt ein mobiles Verkehrsüberwachungssystem 1 nach dem Stand der Technik. Das Verkehrsüberwachungssystem 11 weist eine Sensorvorrichtung 2, eine Kameravorrichtung 3 sowie eine Beleuchtungsvorrichtung 4 auf. Sensorvorrichtung 2, eine Kameravorrichtung 3 sowie eine Beleuchtungsvorrichtung 4 sind auch als Komponenten 2,3,4 des Verkehrsüberwachungssystems 1 bezeichnet. Jede Komponente 2,3,4 ist mit jeweils einem ersten Energiespeicher 5 verbunden, der unterhalb der Komponente 2,3,4 als grosser Batteriespeicher auf dem Boden stehend angeordnet ist und mit jeweils einem Kabel 28 mit der Komponente 2,3,4 elektrisch verbunden ist.

In den weiteren Figuren zeigen jeweils gleiche Bezugszeichen in den dargestellten Ausführungsformen gleiche Elemente an.

Fig. 2 zeigt ein mobiles Verkehrsüberwachungssystem 1 mit erfindungsgemässen Komponenten 2,3,4. Das Verkehrsüberwachungssystem 1 weist eine erfindungsgemässe Sensorvorrichtung 2, eine erfindungsgemässe Kameravorrichtung 3 sowie eine erfindungsgemässe Beleuchtungsvorrichtung 4 auf. Es wird darauf hingewiesen, dass im Sinne der Erfindung nicht alle drei gezeigten Komponenten 2,3,4 vorhanden sein müssen bzw. nicht alle drei Komponenten in erfindungsgemässer Ausführungsform vorhanden sein müssen, sondern bereits eine der Komponenten 2,3,4 einzeln erfindungsgemäss ausgeführt sein kann. Jede Komponente 2,3,4 weist jeweils ein Kommunikationsmittel 23 auf. Das Kommunikationsmittel 23 ist eingerichtet mittels drahtloser Funkverbindung 25 mit der Kontrollvorrichtung 24 elektronisch verbunden zu sein. Das Verkehrsüberwachungssystem 11 der Fig. 2 ist exemplarisch an einer Fahrbahn 27 angeordnet und eingerichtet, eine Geschwindigkeit eines sich entlang der Fahrbahn 27 bewegenden Fahrzeuges 26 zu ermitteln. Die Sensorvorrichtung 2 ist als Einseitensensor ausgeführt. Fig. 2 zeigt jeweils eine Kameravorrichtung 2 und eine davon beabstandet angeordnete Beleuchtungsvorrichtung 3. Es sind jedoch ohne weiteres weitere Kameravorrichtungen 3 möglich, beispielsweise für eine Aufnahme der Front eines Fahrzeuges in Gegenrichtung zum dargestellten Fahrzeug oder für gegebenenfalls vorhandene weitere Fahrspuren. Ebenso sind ohne weiteres weitere Beleuchtungsvorrichtungen 4 möglich, beispielsweise für eine Beleuchtung von Fahrzeugen auf verschiedenen Fahrspuren oder eine Beleuchtung eines Fahrzeuges aus verschiedenen Richtungen.

Fig. 3 zeigt eine schematische Darstellung einer erfindungsgemässen Ausführungsform einer Komponente 2,3,4 eines Verkehrsüberwachungssystems 1. Die Komponente 2,3,4 ist in der Ausführungsform einer Sensorvorrichtung 2 dargestellt. Die Sensorvorrichtung 2 ist beispielshaft als Einseitensensor 2 ausgeführt. Die Sensorvorrichtung 2 weist einen ersten Energiespeicher 5 und einen zweiten Energiespeicher 6 auf. Die Komponente 2 weist ein Gehäuse 10 auf. Das Gehäuse 10 weist eine erste Aussparung 14 und eine zweite Aussparung 15 auf, welche in der Fig. 3 durch eine erste Abdeckung 32 respektive zweite Abdeckung 33 abgedeckt sind. In der ersten Aussparung 14 ist ein erster Energiespeicher 5 angeordnet (in Fig. 3 durch die Abdeckung 32 verdeckt und nicht sichtbar). In der zweiten Aussparung 15 ist ein zweiter Energiespeicher 6 angeordnet (in Fig. 3 durch die Abdeckung 33 verdeckt und nicht sichtbar).

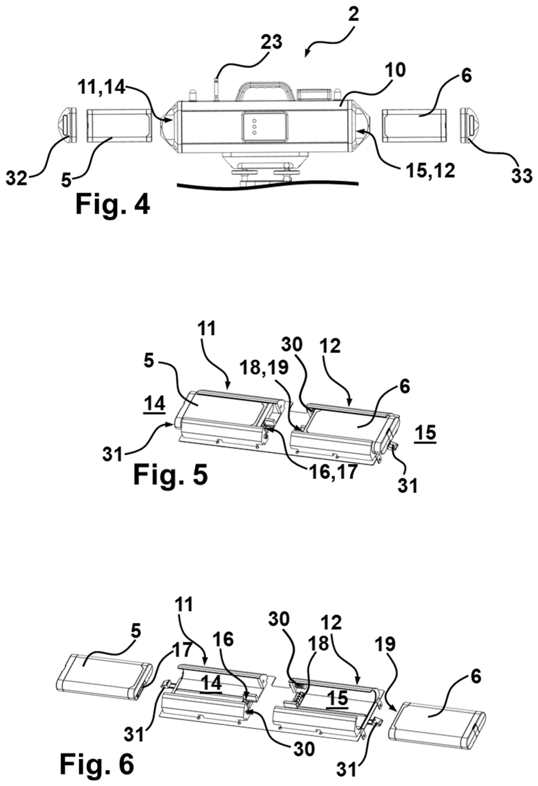

Die Ausführungsform der Komponente 2 aus Fig. 3 ist in Fig. 4 in einer Explosionsansicht der schematischen Darstellung gezeigt. Der erste/zweite Energiespeicher 5,6 ist ausserhalb der ersten/zweiten Aussparung 14,15 dargestellt. Die Explosionsansicht dient der besseren Veranschaulichung und zeigt zudem, dass erster/zweiter Energiespeicher 5,6 aus dem, in der ersten/zweiten Aussparung 14,15 angeordneten, Haltevorrichtung 11,12 (Haltevorrichtung 11,12 in Fig. 4 nicht sichtbar, in Fig. 5, und Fig. 6 als Detail schematisch dargestellt) reversibel entfernbar sind. Auch die erste/zweite Abdeckung 32,33 der ersten/zweiten Aussparung ist entsprechend beabstandet von der ersten/zweiten Aussparung dargestellt.

Zur Veranschaulichung der Anordnung der Energiespeicher 5,6 innerhalb des Gehäuses 10 der Komponente 2 zeigt die Fig. 5 eine schematische Teilansicht der innerhalb des Gehäuses 10 angeordneten ersten Haltevorrichtung 11 und der innerhalb des Gehäuses angeordneten zweiten Haltevorrichtung 12. Das Gehäuse 10 und alle weiteren Elemente der Komponente 2 sind der Übersichtlichkeit halber ausgeblendet. Die Fig. 5 zeigt die ersten/zweiten Haltevorrichtung 11,12 mit darin angeordneten ersten/zweiten Energiespeicher 5,6. Die erste/zweite Haltevorrichtung 11,12 weist eine Spannvorrichtung 30 sowie eine Verriegelung 31 auf. Der Energiespeicher 5,6 ist in die Haltevorrichtung 11,12 einschiebbar und in der Haltevorrichtung 11,12 durch die Verriegelung 31 reversibel fixierbar. Die Spannvorrichtung 30 spannt den ersten/zweiten Energiespeicher 5,6 in der Haltevorrichtung 11,12 gegen die Verriegelung 31 vor. Elektrische Energie ist mittels des elektrischen Verbindungsmittel 17,19 des ersten/zweiten Energiespeichers 5,6 an das Verbindungsmittel 18,20 der ersten/zweiten Haltevorrichtung 11,12 und damit an die Komponente 2 (nicht gezeigt) übertragbar.

Die Ausführungsform der Haltevorrichtung 11,12 innerhalb des Gehäuses 10 der Komponente 2 aus Fig. 5 ist in Fig. 6 in einer Explosionsansicht der schematischen Darstellung gezeigt. Die erste/zweite Haltevorrichtung 11,12 ist innerhalb der Aussparungen 14,15 des Gehäuses 10 (nicht gezeigt) angeordnet. Der erste/zweite Energiespeicher 5,6 ist ausserhalb der ersten/zweiten Haltevorrichtung 11,12 dargestellt. Die Explosionsansicht dient der besseren Veranschaulichung und zeigt zudem, dass erster/zweiter Energiespeicher 5,6 aus der Haltevorrichtung 11,12 reversibel entfernbar sind. Die Spannvorrichtung 30 ist als Druckfeder 30 ausgeführt, die in der Haltevorrichtung 11,12 ohne Energiespeicher 5,6 im entspannten Zustand dargestellt ist. Die Verriegelung 31 ist in dieser Ausführungsform hakenförmig ausgestaltet. Elektrische Verbindungsmittel 17,19 des ersten/zweiten Energiespeichers 5,6 sind als metallische Kontaktflächen sichtbar und Verbindungsmittel 18,20 der ersten/zweiten Haltevorrichtung 11,12 sind ebenfalls als metallische Kontaktflächen ausgestaltet. Elektrische Energie ist bei eingelegtem Energiespeicher 5,6 an die Komponente 2 (nicht gezeigt) übertragbar.

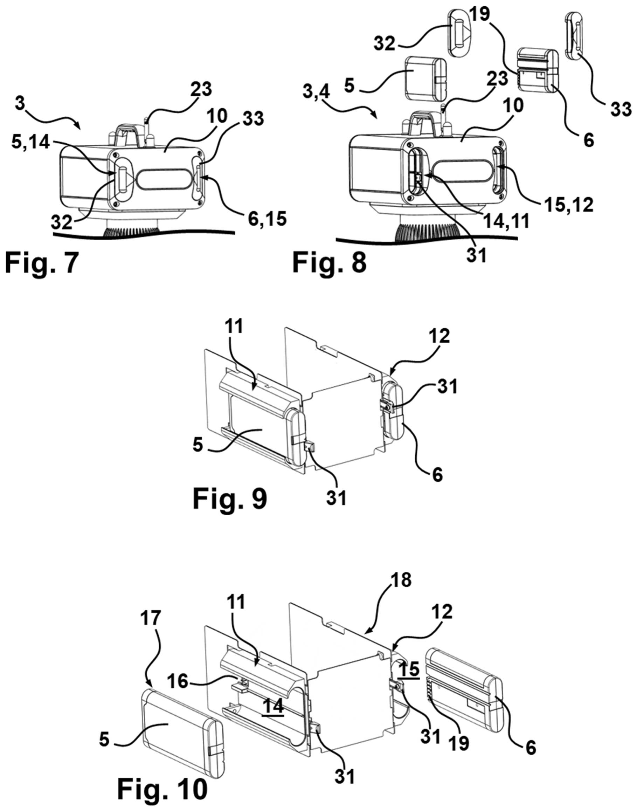

Fig. 7 zeigt eine weitere schematische Teilansicht einer Ausführungsform einer weiteren Komponente 2,3,4 eines mobilen Verkehrsüberwachungssystems 1 aus Fig. 2. Die Komponente 2,3,4 ist in der Ausführungsform der Fig. 7 als eine Kameravorrichtung 3 und/oder einer Beleuchtungsvorrichtung 4 dargestellt. Kameravorrichtung 3 und Beleuchtungsvorrichtung 4 unterscheiden sich in dieser Ausführungsform hauptsächlich in der Ausgestaltung im Gehäuse 10 angeordneter Elemente und der Ausgestaltung der in Fig. 7 abgewandten Seite der Komponente 3,4. Diese ist jedoch für das Verständnis der erfindungsgemässen Ausgestaltung der Komponente 3,4 nicht relevant. Daher wird sowohl eine erfindungsgemässe Beleuchtungsvorrichtung als auch eine erfindungsgemässe Kameravorrichtung anhand der Fig. 7, Fig. 8, Fig. 9 und Fig. 10 beschrieben. Die Komponente 3,4 weist einen ersten Energiespeicher 5 und einen zweiten Energiespeicher 6 auf. Die Komponente 3,4 weist zudem ein Gehäuse 10 auf. Das Gehäuse 10 weist eine erste Aussparung 14 und eine zweite Aussparung 15 auf, welche in der Fig. 7 durch eine erste Abdeckung 32 respektive zweite Abdeckung 33 abgedeckt sind. In der ersten Aussparung 14 ist ein erster Energiespeicher 5 angeordnet (in Fig. 7 durch die Abdeckung 32 verdeckt und nicht sichtbar). In der zweiten Aussparung 15 ist ein zweiter Energiespeicher 6 angeordnet (in Fig. 7 durch die Abdeckung 33 verdeckt und nicht sichtbar).

Die Ausführungsform der Komponente 2,3 aus Fig. 7 ist in Fig. 8 in einer Explosionsansicht der schematischen Darstellung gezeigt. Der erste/zweite Energiespeicher 5,6 ist ausserhalb der ersten/zweiten Aussparung 14,15 dargestellt. Die Explosionsansicht dient der besseren Veranschaulichung und zeigt zudem, dass erster/zweiter Energiespeicher 5,6 aus dem, in der ersten/zweiten Aussparung 14,15 angeordneten, Haltevorrichtung 11,12 (Haltevorrichtung 11,12 in Fig. 8 nicht sichtbar, in Fig. 9, und Fig. 10 als Detail schematisch dargestellt) reversibel entfernbar sind. Auch die erste/zweite Abdeckung 32,33 der ersten/zweiten Aussparung ist entsprechend beabstandet von der ersten/zweiten Aussparung dargestellt.

Zur Veranschaulichung der Anordnung der Energiespeicher 5,6 innerhalb des Gehäuses 10 der Komponente 3,4 zeigt die Fig. 9 eine schematische Teilansicht der innerhalb des Gehäuses 10 angeordneten ersten Haltevorrichtung 11 und der innerhalb des Gehäuses angeordneten zweiten Haltevorrichtung 12. Das Gehäuse 10 und alle weiteren Elemente der Komponente 2 sind der Übersichtlichkeit halber ausgeblendet. Die Fig. 9 zeigt die ersten/zweiten Haltevorrichtung 11,12 mit darin angeordneten ersten/zweiten Energiespeicher 5,6. Die erste/zweite Haltevorrichtung 11,12 weist eine Spannvorrichtung 30 sowie eine Verriegelung 31 auf. Der Energiespeicher 5,6 ist in die Haltevorrichtung 11,12 einschiebbar und in der Haltevorrichtung 11,12 durch die Verriegelung 31 reversibel fixierbar. Die Spannvorrichtung 30 spannt den ersten/zweiten Energiespeicher 5,6 in der Haltevorrichtung 11,12 gegen die Verriegelung 31 vor. Elektrische Energie ist mittels des elektrischen Verbindungsmittel 17,19 des ersten/zweiten Energiespeichers 5,6 an das Verbindungsmittel 18,20 der ersten/zweiten Haltevorrichtung 11,12 und damit an die Komponente 2 (nicht gezeigt) übertragbar.

Die Ausführungsform der Haltevorrichtung 11,12 innerhalb des Gehäuses 10 der Komponente 2 aus Fig. 9 ist in Fig. 10 in einer Explosionsansicht der schematischen Darstellung gezeigt. Die erste/zweite Haltevorrichtung 11,12 ist innerhalb der Aussparungen 14,15 des Gehäuses 10 (nicht gezeigt) angeordnet. Der erste/zweite Energiespeicher 5,6 ist ausserhalb der ersten/zweiten Haltevorrichtung 11,12 dargestellt. Die Explosionsansicht dient der besseren Veranschaulichung und zeigt zudem, dass erster/zweiter Energiespeicher 5,6 aus der Haltevorrichtung 11,12 reversibel entfernbar sind. Die Spannvorrichtung 30 ist als Druckfeder 30 ausgeführt, die in der Haltevorrichtung 11,12 ohne Energiespeicher 5,6 im entspannten Zustand dargestellt ist. Die Verriegelung 31 ist in dieser Ausführungsform hakenförmig ausgestaltet. Elektrische Verbindungsmittel 17,19 des ersten/zweiten Energiespeichers 5,6 sind als metallische Kontaktflächen sichtbar und Verbindungsmittel 18,20 der ersten/zweiten Haltevorrichtung 11,12 sind ebenfalls als metallische Kontaktflächen ausgestaltet. Elektrische Energie ist bei eingelegtem Energiespeicher 5,6 an die Komponente 3,4 (nicht gezeigt) übertragbar.

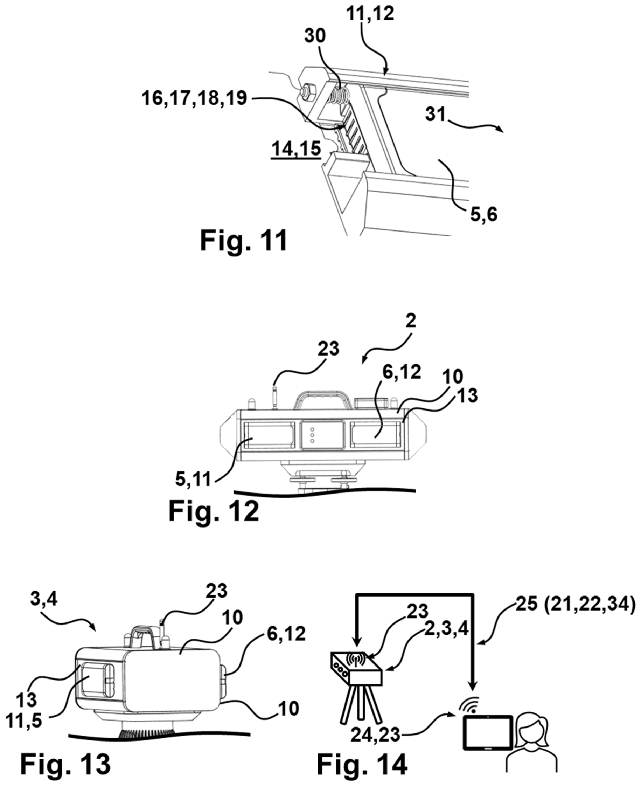

Fig. 11 zeigt schematisch eine vergrösserte Teilansicht einer Haltevorrichtung 11,12 mit darin angeordnetem Energiespeicher 5,6 und elektrischen Verbindungsmitteln 17,19 des Energiespeichers 5,6 sowie elektrischen Verbindungsmitteln 16,18 der Haltevorrichtung. Ebenfalls ist in Fig. 11 deutlich die Spannvorrichtung 30 in Form einer Druckfeder 30 sichtbar, die den Energiespeicher 5,6 gegen die Verriegelung 31 (nicht gezeigt) spannt.

Fig. 12 zeigt eine alternative Ausführungsform einer Komponente 2,3,4. Abweichend von der Ausführungsform der Fig. 3 und Fig. 4 weist die Komponente 2,3,4 keine Aussparung im Gehäuse 10 und entsprechend keine Abdeckung 32,33 auf. Erster Energiespeicher 5 und zweiter Energiespeicher 6 sind an der Aussenseite 13 des Gehäuses 10 angeordnet. An der Aussenseite 13 sind entsprechend eine erste Haltevorrichtung 11 und eine zweite Haltevorrichtung 12 angeordnet. Die weiteren Details der Haltevorrichtung, wie Verriegelung, Spannvorrichtung und elektrisches Verbindungsmittel sind mutatis mutandis gleich der Verriegelung, Spannvorrichtung und elektrischen Verbindungsmittel der bereits beschriebenen Ausführungsformen.

Fig. 13 zeigt eine weitere alternative Ausführungsform einer Komponente 2,3,4. Abweichend von der Ausführungsform der Fig. 12 sind erster Energiespeicher 5 und zweiter Energiespeicher 6 an unterschiedlichen Positionen in den jeweiligen Haltevorrichtungen 11,12 auf der Aussenseite 13 des Gehäuses 10 angeordnet. Selbstverständlich sind auch andere Positionen für Haltevorrichtungen denkbar.

Fig. 14 zeigt exemplarisch für eine Komponente 2,3,4 die drahtlose Kommunikation der Komponente 2,3,4 mit der Kontrollvorrichtung 24. Die Komponente 2,3,4 weist ein Kommunikationsmittel 23 auf und die Kontrollvorrichtung 24 weist ein Kommunikationsmittel 23 auf. Kontrollvorrichtung 24 und Komponente 2,3,4 sind derart elektronisch über eine drahtlose Funkverbindung 25 verbunden. Auf der Kontrollvorrichtung können so Temperatursignal 21 und/oder Spannungssignal 22 und/oder weitere Signale, welche als Datensignal 34 über die drahtlose Funkverbindung 25 übertragebar sind, angezeigt werden.

### Bezugszeichenliste

- 1: Verkehrsüberwachungssystem
- 2: Sensorvorrichtung, Komponente
- 3: Kameravorrichtung, Komponente
- 4: Beleuchtungsvorrichtung, Komponente
- 5: Erster Energiespeicher, intelligenter erster Energiespeicher
- 6: Zweiter Energiespeicher, intelligenter zweiter Energiespeicher
- 7: Geladener Energiespeicher
- 8: Temperaturfühler
- 9: Spannungsmesser
- 10: Gehäuse
- 11: erste Haltevorrichtung
- 12: zweite Haltevorrichtung
- 13: Aussenseite
- 14: Erste Aussparung
- 15: Zweite Aussparung
- 16: Elektrisches Verbindungsmittel
- 17: Elektrisches Verbindungsmittel
- 18: Elektrisches Verbindungsmittel
- 19: Elektrisches Verbindungsmittel
- 20: Kamera mit integriertem Beleuchtungssystem, Komponente
- 21: Temperatursignal
- 22: Spannungssignal
- 23: Kommunikationsmittel
- 24: Kontrollvorrichtung
- 25: Drahtlose Funkverbindung, drahtlose Verbindung
- 26: Fahrzeug
- 27: Fahrbahn
- 28: Kabel
- 29: Kommunikationsmittel
- 30: Spannvorrichtung
- 31: Verriegelung
- 32: Erste Abdeckung
- 33: Zweite Abdeckung
- 34: Datensignal

## Patentansprüche

1. Mobiles Verkehrsüberwachungssystem (1) umfassend mindestens eine Sensorvorrichtung (2) und mindestens eine Kameravorrichtung (3); wobei die Sensorvorrichtung (2) eingerichtet ist eine Geschwindigkeit eines Fahrzeuges (26) auf einer Fahrbahn (27) zu erfassen; wobei die Kameravorrichtung (3) eingerichtet ist zumindest einen Teilbereich des Fahrzeuges (26) auf der Fahrbahn (27) zu erfassen; wobei eine Komponente (2,3,4) die Sensorvorrichtung (2) oder die Kameravorrichtung (3) oder eine Beleuchtungsvorrichtung (4) ist; wobei die Komponente (2,3,4) des Verkehrsüberwachungssystems (1) mit einem ersten Energiespeicher (5) für elektrischer Energie elektrisch verbunden ist; **dadurch gekennzeichnet, dass** die Komponente (2,3,4) mit mindestens einem zweiten Energiespeicher (6) für elektrische Energie elektrisch verbunden ist.

2. Mobiles Verkehrsüberwachungssystem (1) nach dem vorgehenden Anspruch, **dadurch gekennzeichnet, dass** erster Energiespeicher (5) und zweiter Energiespeicher (6) eingerichtet sind, die Komponente (2,3,4) unabhängig voneinander mit elektrischer Energie zu versorgen.

3. Mobiles Verkehrsüberwachungssystem (1) nach einem der vorgehenden Ansprüche, **dadurch gekennzeichnet, dass** der erste Energiespeicher (5) reversibel mit der Komponente (2,3,4) verbindbar ist; dass der zweite Energiespeicher (6) reversibel mit der Komponente (2,3,4) verbindbar ist; dass erster Energiespeicher (5) die Komponente (2,3,4) mit elektrischer Energie versorgt, wenn ein teilweise entladener zweiter Energiespeicher (6) zur Auswechselung mit einem geladenen Energiespeicher (7) entfernt ist.

4. Mobiles Verkehrsüberwachungssystem (1) nach einem der vorgehenden Ansprüche, **dadurch gekennzeichnet, dass** der erste Energiespeicher (5) als intelligenter Energiespeicher (5) ausgeführt ist; dass der zweite Energiespeicher (6) als intelligenter Energiespeicher (6) ausgeführt ist; und dass der intelligente Energiespeicher (5,6) zumindest einen Temperaturfühler (8) und einen Spannungsmesser (9) für elektrische Spannung aufweist.

5. Mobiles Verkehrsüberwachungssystem (1) nach dem vorgehenden Anspruch, **dadurch gekennzeichnet, dass** der Temperaturfühler (8) eine Temperatur des Energiespeichers (5,6) als Temperatursignal (21) bereitstellt; dass der Spannungsmesser (9) eine elektrische Spannung des Energiespeichers (5,6) als Spannungssignal (22) bereitstellt; und dass mindestens Spannungssignal (21) und Temperatursignal (22) als Datensignal (34) bereitgestellt sind.

6. Mobiles Verkehrsüberwachungssystem (1) nach dem vorgehenden Anspruch, **dadurch gekennzeichnet, dass** die Komponente (2,3,4) eingerichtet ist das Datensignal (34) des ersten Energiespeichers (5) zu erfassen; und dass die Komponente (2,3,4) eingerichtet ist das Datensignal (34) des zweiten Energiespeichers (6) zu erfassen.

7. Mobiles Verkehrsüberwachungssystem (1) nach einem der Ansprüche 3 bis 6, **dadurch gekennzeichnet, dass** die Komponente ein Gehäuse (10) aufweist; dass das Gehäuse (10) einen ersten Haltevorrichtung (11) aufweist; das der erste Haltevorrichtung (11) an einer Aussenseite (13) des Gehäuses (10) angeordnet ist; dass der erste Energiespeicher (5) mit dem ersten Haltevorrichtung (11) einschiebbar oder einrastbar reversibel verbindbar ist; dass das Gehäuse (10) mindestens einen zweiten Haltevorrichtung (12) aufweist; das der zweite Haltevorrichtung (12) an der Aussenseite (13) des Gehäuses (10) angeordnet ist; und dass der zweite Energiespeicher (6) mit dem zweiten Haltevorrichtung (12) einschiebbar oder einrastbar reversibel verbindbar ist.

8. Mobiles Verkehrsüberwachungssystem (1) nach einem der Ansprüche 3 bis 6, **dadurch gekennzeichnet, dass** die Komponente (2,3,4) ein Gehäuse (10) aufweist; dass das Gehäuse (10) eine erste Aussparung (14) für den ersten Energiespeicher (5) aufweist; dass das Gehäuse (10) eine zweite Aussparung (15) für den zweiten Energiespeicher (6) aufweist; dass der erste Energiespeicher (5) in die erste Aussparung (14) einschiebbar ist; dass der zweite Energiespeicher (6) in die zweite Aussparung (15) einschiebbar ist; und dass in der ersten Aussparung (14) ein erster Haltevorrichtung (11) angeordnet ist; und dass in der zweiten Aussparung (15) ein zweiter Haltevorrichtung (12) angeordnet ist; dass der erste Energiespeicher (5) mit dem ersten Haltevorrichtung (11) einschiebbar oder einrastbar reversibel verbindbar ist; und dass der zweite Energiespeicher (6) mit dem zweiten Haltevorrichtung (12) einschiebbar oder einrastbar reversibel verbindbar ist.

9. Mobiles Verkehrsüberwachungssystem (1) nach einem der Ansprüche 7 oder 8, **dadurch gekennzeichnet, dass** der erste Haltevorrichtung (11) ein elektrisches Verbindungsmittel (16) aufweist; dass der erste Energiespeicher (5) ein elektrisches Verbindungsmittel (17) aufweist; dass die ersten elektrischen Verbindungsmittel (16,17) eingerichtet sind einen elektrischen Kontakt zur Übertragung von elektrischer Energie zwischen erstem Energiespeicher (5) und der Komponente (2,3,4) herzustellen; dass die ersten elektrischen Verbindungsmittel (16,17) eingerichtet sind einen elektrischen Kontakt zur Übertragung des Datensignals (34) zwischen erstem Energiespeicher (5) und der Komponente (2,3,4) herzustellen; dass der zweite Haltevorrichtung (12) ein elektrisches Verbindungsmittel (18) aufweist; dass der zweite Energiespeicher (6) ein elektrisches Verbindungsmittel (19) aufweist; dass die zweiten elektrischen Verbindungsmittel (18,19) eingerichtet sind einen elektrischen Kontakt zur Übertragung von elektrischer Energie zwischen der Komponente (2,3,4) und zweitem Energiespeicher (6) herzustellen; und dass die zweiten elektrischen Verbindungsmittel (18,19) eingerichtet sind einen elektrischen Kontakt zur Übertragung des Datensignals (34) zwischen zweitem Energiespeicher (6) und der Komponente (2,3,4) herzustellen.

10. Mobiles Verkehrsüberwachungssystem (1) nach dem vorgehenden Anspruch, **dadurch gekennzeichnet, dass** der Haltevorrichtung (11,12) eine Spannvorrichtung (30) und eine Verriegelung (31) aufweist, welche Spannvorrichtung (30) den in der Aussparung (14,15) angeordneten Energiespeicher (5,6) gegen die Verriegelung (31) vorspannt.

11. Mobiles Verkehrsüberwachungssystem (1) nach einem der vorgehenden Ansprüche, **dadurch gekennzeichnet, dass** das Gewicht des Energiespeichers (5,6) weniger als oder gleich 1 kg, bevorzugt weniger als oder gleich 500 g beträgt.

12. Mobiles Verkehrsüberwachungssystem (1) mit mindestens einer weiteren Komponente (2,3,4,20) nach einem der vorgehenden Ansprüche, **dadurch gekennzeichnet dass** die weitere Komponente (2,3,4,20) eine Sensorvorrichtung (2) oder eine Kameravorrichtung (3) oder eine Beleuchtungsvorrichtung (4) oder eine Kameravorrichtung mit integrierter Beleuchtungsvorrichtung (20) ist; und dass die weitere Komponente (2,3,4,20) mit mindestens drei Energiespeichern für elektrische Energie elektrisch verbunden ist.

13. Mobiles Verkehrsüberwachungssystem (1) nach einem der vorgehenden Ansprüche, **dadurch gekennzeichnet, dass** die Komponente (2,3,4,20) mindestens ein drahtloses Kommunikationsmittel (23) aufweist; dass eine Kontrollvorrichtung (24) mindestens ein drahtloses Kommunikationsmittel (29) aufweist; und dass die Komponente (2,3,4,20) mittels drahtloser Datenverbindung (25) mit der Kontrollvorrichtung (24) verbindbar ist.

14. Mobiles Verkehrsüberwachungssystem (1) nach dem vorgehenden Anspruch, **dadurch gekennzeichnet, dass** zumindest die Spannung des ersten Energiespeichers (5) und die Spannung des zweiten Energiespeichers (6) als Datensignal (34) an die Kontrollvorrichtung (24) übertragbar sind; und zumindest die Spannung des ersten und zweiten Energiespeichers (5,6) und/oder eine Restlaufzeit des ersten und zweiten Energiespeichers (5,6) und/oder ein Ladestand des ersten und zweiten Energiespeichers (5,6) auf einem Bildschirm der Kontrollvorrichtung (24) anzeigbar sind.

15. Verwendung eines mobilen Verkehrsüberwachungssystems (1) nach Anspruch 13, **dadurch gekennzeichnet, dass** die Komponente (2,3,4,20) an einer Fahrbahn (27) angeordnet wird; dass die Kontrollvorrichtung (24) von der Komponente (2,3,4,20) beabstandet angeordnet wird; dass die Komponente (2,3,4,20) mit der Kontrollvorrichtung (24) drahtlos verbunden wird; dass zumindest die Spannung des ersten Energiespeichers (5) und die Spannung des zweiten Energiespeichers (6) als Datensignal (34) an die Kontrollvorrichtung (24) übertragen werden; dass zumindest die Spannung des ersten und zweiten Energiespeichers (5,6) und/oder eine Restlaufzeit des ersten und zweiten Energiespeichers (5,6) und/oder ein Ladestand des ersten und zweiten Energiespeichers (5,6) auf einem Bildschirm der Kontrollvorrichtung (34) angezeigt werden; und dass eine Aufforderung zum Wechsel eines Energiespeichers (5,6) angezeigt wird, wenn die Spannung des Energiespeichers (5,6) einen vordefinierten Wert unterschreitet; und dass der Energiespeicherwechsel erfolgt ohne dass die Komponente (2,3,4,20) in ihrer Funktionalität beeinträchtigt wird.
